# EUROPEAN PATENT SPECIFICATION

(11) **EP 4 507 623 B1**
(45) Date of publication and mention of the grant of the patent: **15.07.2026**
(21) Application number: 23706424.1
(22) Date of filing: 10.02.2023
(51) Int. Cl.: A61C 7/14, A61C 7/22

(54) **ORTHODONTIC DEVICE FOR A DENTAL BRACE**
ORTHODONTISCHE VORRICHTUNG FÜR EINE ZAHNSPANGE
DISPOSITIF ORTHODONTIQUE POUR ATTELLE DENTAIRE

(30) Priority: 13.04.2022 GB 202205478
(43) Date of publication of application: 19.02.2025
(73) Proprietor: Esmail Medical Limited, Kingswood KT20 6QW (GB)
(72) Inventor: ESMAIL, Zaid, Kingswood KT20 6QW (GB)
(74) Representative: Herrero & Asociados, S.L.
(86) International application number: PCT/GB2023/050303
(87) International publication number: WO 2023/199011

(56) References cited:
- DE-A1- 102016 118 261
- US-A1- 2008 182 219
- US-B1- 9 498 302

## Description

The present invention relates to an orthodontic device for use in a dental brace for advancing eruption of a tooth.

### BACKGROUND TO THE INVENTION

Documents in the art are exemplified by DE 10 2016 118261 A1 and US 2008/182219 A1.

A dental brace is a device used to re-align a person's teeth for cosmetic or therapeutic reasons. The brace includes a series of brackets (typically stainless steel) bonded to some or all of the upper set or lower set of teeth, and a brace wire (or archwire) is joined to each of the brackets.

Brace wire is often made from nitinol and can remember its shape. When deformed, the brace wire inherently straightens itself to reform its original shape. This applies force to move the teeth over a period of time, typically on the order of months.

Different teeth erupt from the gum at different rates. Sometimes, a tooth can be impeded from fully erupting from the gum, for example due to crowding by adjacent teeth. This is called a partially erupted tooth. A dental brace can sometimes be used to provide a suitably-sized gap for the partially-erupted tooth to fully erupt into.

It is sometimes preferable to wait for all teeth to fully erupt before using a dental brace to align the teeth. If it is preferable to fit a dental brace when there is a partially-erupted tooth, then eruption of that tooth may be accelerated using the dental brace. However, as the tooth erupts further and the brace wire straightens, the force encouraging eruption of the tooth tends to decrease and so full eruption of the tooth takes longer than would be ideal, meaning that the brace must be worn for longer.

For a partially-erupted tooth, the optimal position to bond a dental bracket in place is a position inset far enough from the end of the tooth such that - once the tooth is fully erupted - the bracket ends up being aligned with the brackets on adjacent fully-erupted teeth. However, a partially-erupted tooth does not usually have enough exposed surface above the gum line available to bond a conventional dental bracket in the optimal position.

To overcome this, there are several options an orthodontist may use to accelerate tooth eruption. One option is sequential bracket placement. The bracket is attached to the tooth as high as possible on the already-erupted surface, and the tooth is partially brought down (or up) via the dental brace. The bracket is then removed and bonded again in a new position, as high as possible on the newly-erupted surface. The process is repeated until the bracket can be bonded in the optimal position. In some cases, this process needs to be repeated four or five times, which can be inconvenient, time-consuming and expensive.

Another option is the use of elastics. In this case, a bracket is placed on the exposed portion of the partially erupted tooth and elastics (fitted to brackets on upper and lower teeth) are used to help cause the tooth to erupt more quickly. However, it can be uncomfortable to wear and more difficult to clean. Elastics also tend to provide relatively little control over tooth movement. Furthermore, there is a loss of elasticity over time, so the patient needs to remember to change the elastics periodically to mitigate this. Patient compliance is a known issue in that respect.

A further option is to perform surgery on the gum. A portion of the gum is removed to expose more of the surface of the partially erupted tooth. The bracket may then be attached at, or closer to, the optimal position. Surgery carries the risk of complications and may lead to gum inflammation or infection, and may require special care to be taken post-surgery. It is also generally more invasive, causes discomfort and requires local anaesthetic to be administered.

A fourth option is to place bends in the brace wire which may encourage faster eruption of the partially erupted tooth. However, this may have limited impact in reducing overall eruption time and can also make it harder to brush around the brace wire to remove trapped food, for example. It should be noted that this option is comparatively technique-sensitive. It is very hard to put bends in the nitinol wire due to the shape memory of the wire and, although it is somewhat easier to place bends in stainless steel wire, it can be time-consuming process. The amount of wire activation which can be done at a given time is also limited, so multiple trips to the dentist for wire adjustment are still required in order to erupt the tooth more quickly.

It is an object of the present invention to reduce or substantially obviate the aforementioned problems.

### STATEMENT OF INVENTION

According to the present invention, there is provided an orthodontic device (or orthodontic bracket) for a dental brace as defined in claim 1. Further embodiments are defined in dependent claims 2 to 15.

The orthodontic device allows a partially-erupted tooth to be erupted substantially more quickly and conveniently than existing methods, without the need for surgery.

The orthodontic device may be considered as an offset bracket or bracket with an offset brace wire portion. That is, a bracket where there is an offset between the base that is bonded to the tooth during use and the wire receiving portion that receives the brace wire during use. The wire receiving portion thus does not directly overlie the base.

The offset allows part of the wire to be positioned at or closer to the optimal position, without requiring the optimal position of the tooth to be exposed from the gum. That is, the brace wire deviation up/down to the unerupted region of the tooth generates force on that particular tooth to contribute to substantially faster eruption of the tooth, when the orthodontic device is used in a dental brace.

The body of the orthodontic device can be bonded to an exposed surface of the partially erupted tooth and the wire receiving portion is positioned offset from the body by the arm.

An archwire may be provided in the wire-receiving portion such that, when viewing the tooth surface face-on, the archwire can be seen to extend across the tooth from side to side. The wire can be secured to the orthodontic device, offset to the side of the bonded region rather than being disposed above the bonded region, relative to the tooth surface.

The orthodontic tool does not need to be positioned in the optimal position on the tooth, and therefore mitigates the need for surgery to remove a portion of the gum over the tooth.

By providing the wire receiving portion at an offset relative to the body, the brace wire may be positioned at the offset position during an initial visit to a dentist or orthodontist. The force applied by the wire may then be used to pull the partially erupted tooth into a corresponding gap in the person's teeth.

The orthodontic device can speed up eruption of the partially erupted tooth from the gum. The orthodontic device may erupt a partially erupted tooth in comparatively fewer visits to the orthodontist than conventional means. For example, the orthodontic device or tool may substantially fully erupt a partially erupted tooth in a single visit, or two or three visits, to a dentist or orthodontist.

The base of the body and a central region or axis of the bore or through aperture of the first wire receiving portion may be disposed on a common lateral plane.

This means that the wire receiving portion is set back from the front of the device, closer to the gum, which can mean that force is transferred to the tooth more effectively.

The second wire receiving portion is fixed midway along the arm, between the body and the first wire receiving portion.

The body may include a hub atop the base. The arm may extend radially out of the hub. The extension may be considered to be radial when viewed from the central longitudinal axis of the body, although it will be appreciated that this does not require the arm to be radial with respect to the central longitudinal axis (e.g. the arm may be curved, but appear to extend radially when viewing the device from the front, such as when bonded to a tooth).

The hub may be substantially cylindrical. The hub may have a domed top.

The longitudinal axis followed by the arm may intersect the bore or through aperture of the first wire receiving portion (and optionally that of the second wire receiving portion).

The first wire receiving portion may be substantially as wide as the base. Where provided, the second wire receiving portion may be substantially as wide as the base (and as wide as the first wire receiving portion).

This can help to distribute force evenly across the width of the tooth.

A width or diameter of the bore(s) or through aperture(s) may be substantially half of a width or diameter of the relevant wire receiving portion.

The top face may be about half as wide as the base, and the arm may be about half as wide as the top face.

The hub may be about half as wide as the base, and the arm may be about half as wide as the hub.

A length to width ratio of the device may be substantially between 2:1 and 3:1. That is, when viewed from the front (e.g. as seen when bonded to a tooth) the maximum length of the device, i.e. from top to bottom, may be between two to three times greater than the maximum width (perpendicular to the length) of the device across the tooth, i.e. from left to right.

The first and second wire receiving portions may be substantially identical except for their positions along the arm. That is, they may be the same size and have the same size and shape of internal bore / through aperture.

For a part of a brace wire which is disposed in the wire receiving portion during use, its axis may be substantially parallel to a plane at the base of the device body. That is, a plane which is in use disposed between the base and the surface of the tooth it is bonded to. It will be appreciated that the axis may be slightly off-parallel, e.g. if the wire-receiving portion is adjusted by a dentist, but is not perpendicular to that plane.

The wire receiving portion may comprise a first open end and/or a second open end. The or each open end may be disposed on an axis which is substantially parallel to a plane at the base of the body.

The wire receiving portion comprises a bore or through aperture extending along the axis for receiving the brace wire. The bore or through aperture may be open at both ends for allowing the archwire to pass through.

As a currently unclaimed alternative to a bore or through aperture, the wire receiving portion may include an open-ended slot extending along the axis for receiving the brace wire. The slot may be U-shaped or C-shaped in cross-section, for example. However, it will be appreciated that the particular shape of the slot is not limited to these specific options and may be any suitable shape for receiving and/or retaining part of an archwire.

This can allow the wire to be hooked into the slot, e.g. from the front, rear or top. This can be done without needing to thread the wire through a relatively narrow hole on the left or right side.

A surface in the slot or bore of the wire-receiving portion may act as a bearing surface for the archwire to act against for encouraging tooth eruption.

The wire-receiving portion may be any suitable structure for part of the brace wire to be attached or secured in order to exert a force along the arm to the body for encouraging tooth eruption. For example, there may be a notch or seat on the arm to which the archwire can be attached or secured. That is, the wire-receiving portion may be part of the arm.

The arm may have left and right sides for facing towards the left and right sides of the tooth, when bonded to the tooth. The terms left and right are used with respect to an anatomical frame of reference.

The wire receiving portion may be arranged on the arm for allowing the wire to extend in a direction from the left (or right) side of the arm to the right (or left) side of the arm. The wire receiving portion may extend in a direction which is substantially perpendicular to a longitudinal axis of the arm, and also substantially perpendicular to central axis through the base and top of the device body. With this arrangement, the wire may extend directly across the tooth in a direction from the left side of the mouth to the right side of the mouth.

The structure of the wire receiving portion may allow the brace wire to be threaded through, hooked, clipped, attached, mounted, bonded or otherwise secured to the wire receiving portion.

The arm may extend in a direction substantially parallel to the lateral plane at the base of the body. Any point along the arm may be considered laterally offset from the base of the body.

One or both of the arm and the wire-receiving portion may be disposed to a body-side of the plane at the base of the body.

The arm may extend substantially radially from the body. The arm may then be arranged substantially parallel to the partially-erupted tooth the device will be bonded to during use.

The wire receiving portion may be disposed at any position along the arm. The wire receiving portion may be provided at a fixed position on the arm.

The wire receiving portion may be considered to be laterally offset from the base of the body. That is, when viewing the device from its top side, the footprint of the wire-receiving portion does not overlie the footprint of the base.

The arm may comprise a distal end, and a proximal end which is at the body. The wire receiving portion may be disposed at or towards the distal end of the arm. This allows the wire to bear against the wire-receiving portion at a position which is laterally offset from the base of the body by the length of the arm.

The arm may be at least 2mm or 3mm in length. The wire receiving portion may be offset from a centre of the body in a direction along the arm by at least 2mm or 3mm.

The arm may be at least 4mm or at least 5mm in length. The wire receiving portion may be offset from a centre of the body in a direction along the arm by at least 4mm or 5mm.

Preferably the arm is no longer than about 35mm for use in a dental brace for a person. This correspondingly limits the maximum offset of the wire-receiving portion from the base.

Two or three or more wire receiving portions may be provided on the arm. The two or more wire receiving portions may each be laterally offset from the centre of the body by different distances along the arm.

Each wire receiving portion may independently include one or more of the features discussed with respect to the first wire receiving portion.

Providing additional receiving portions allows the orthodontist to put the brace wire in the most suitable position on the device for the tooth in question, e.g. to customise the amount of force that is applied to the tooth. In some cases, it may be more appropriate to secure the wire in a receiving portion which is relatively closer to the erupted end of the tooth. This reduces the extent to which the brace wire needs to be bent when fitting the wire to the orthodontic device and a neighbouring set of brace brackets.

Where additional receiving portions are provided, the wire can be repositioned from the initial receiving portion to a different receiving portion, once the tooth has erupted a bit further. An appropriate force can thus be applied at different stages of the tooth eruption process. The method of adjusting the orthodontic device is discussed in more detail below.

The base may include a disc-shaped element including a bottom surface for bonding to the tooth. The bottom surface may be concave or include an indent. This provides a space to receive adhesive.

The disc-shaped element may include a chamfered or sloped face. The chamfered or sloped face may lead to the top face of the device or towards the hub (where provided).

The base may comprise a mesh base or mesh pad. During use, the mesh base may be in contact with a surface of the tooth. The mesh base facilitates bonding of the body to the tooth.

The arm may be attached directly to the body at the proximal/fixed end. The arm may be directly attached to the arm support portion. The arm may be directly attached to a sidewall of the arm support portion. The arm may extend radially from the arm support portion.

The arm may be straight. The arm may be pre-formed in a curved shape. The arm may be shaped to accommodate the shape of the surrounding teeth, gumline and/or mouth. The curved shape may curve towards a plane disposed at the base of the device.

Where multiple wire receiving portions are provided, the arm may be divided into multiple arm portions. For example, the arm may have a first arm portion extending between a first wire receiving portion and a second wire receiving portion. The arm may have a second arm portion between the second wire receiving portion and the body.

The first and second arm portions may be discontinuous. That is, they may be separated by and disposed to opposing sides of the second arm receiving portion.

Where the arm is pre-formed in a curved shape and divided into multiple arm portions, the curvature of each arm portion may share a common arc.

The arm should be resilient enough not to bend under the force of the brace wire.

The orthodontic device (or any part thereof, such as the body, arm and/or wire-receiving portion) may be made of any of metal, metal alloy, ceramic, plastic or a composite material. Any suitable combination of any two or more of the metal, metal alloy, ceramic, plastic and composite material may be used. The material(s) used in the device should be bio-compatible or non-toxic.

Plastic or ceramic may be preferred because they can be white or off-white in colour, i.e., a similar colour to the tooth the orthodontic device is bonded to. A white or off-white orthodontic device may be camouflaged in this way and therefore be more discreet.

The arm may be adjustable. The arm may comprise a malleable material. This may be preferred where the arm is straight, but can also be provided where the arm is pre-formed or made with another shape such as a curved arm.

The arm may be bendable for adjusting the position of the wire receiving portion relative to the body. This may be beneficial, for example, where the wire receiving portion needs to be bent towards or away from the gumline.

The arm may be integrally formed with the body. The or each wire receiving portion may be integrally formed with the arm. Providing the arm and body and/or the arm(s) and wire receiving portion as an integrally-formed structure reduces potential weakness in the structure, which may otherwise be present at a joint between the arm and body and/or a joint between the arm and wire receiving portion.

According to a second example which is not part of the claimed invention, there is provided a dental brace comprising a plurality of brackets for bonding to teeth, a brace wire (or archwire), and a securing means for securing the brace wire to the plurality of brackets, in which at least one of the brackets is an orthodontic device according to the invention.

The advantages are similar to the invention. The orthodontic device can be bonded to a partially-erupted tooth (assuming a suitable minimum exposed surface to bond to) and can be used encourage faster eruption of that tooth in conjunction with the rest of the dental brace.

According to a third example which is not part of the claimed invention, there is provided a method of bonding the orthodontic device of the invention to a partially erupted tooth, comprising the step of bonding the orthodontic device to an erupted portion of the partially erupted tooth.

The method may comprise the step of bending or otherwise shaping the arm, which can be before and/or after the bonding step.

The method may include the step of securing a brace wire to the wire-receiving portion of the orthodontic device.

According to a fourth example which is not part of the claimed invention, there is provided a method of cosmetic alignment of teeth using a dental brace, comprising the steps of:
providing a dental brace according to the second example;
bonding each of the plurality of brackets to a respective one of the teeth (using a suitable bonding medium), including bonding the orthodontic device of the invention to an erupted portion of a partially erupted tooth;
fitting the brace wire to each bracket and through the wire receiving portion of the orthodontic device; and
securing the brace wire with securing means.

This allows a dental brace to be used to re-align teeth for cosmetic reasons without first having to wait for a tooth (or teeth) to fully erupt. It also avoids the need for surgery on the gum, along with the other advantages of the invention.

The method can be used to allow braces to be fitted to a set of teeth where there is no particular malfunction or pathological state. The teeth may simply need realignment for cosmetic purposes, and the partially erupted tooth is merely delaying the point at which a conventional dental brace can be fitted without resorting to surgery on the gum or requiring many visits to reposition a bracket on the partially erupted tooth. The present invention can therefore be used to allow the dental brace to be fitted without these inconveniences.

When the brace wire (or archwire) is connected to the brace and the orthodontic device, the device can provide a suitable force necessary to encourage the partially erupted tooth into a fully erupted position. The orthodontic device or tool may thereby accelerate eruption of the partially erupted tooth from the gum.

According to a fifth example which does not form part of the claimed invention, there is provided a method of cosmetic alignment of teeth using a dental brace fitted to a set of teeth, including an orthodontic device according to the invention which includes at least two wire receiving portions, the method comprising the steps of:
removing a brace wire from a first wire receiving portion of the orthodontic device; and
securing the brace wire, or a replacement brace wire, to a second wire receiving portion of the orthodontic device.

The wire may therefore be repositioned during a subsequent visit (or visits) to an orthodontist, if the partially-erupted tooth is not erupted in one go by a dental brace which includes the orthodontic device.

With a dental brace has been fitted, the (or each) orthodontic device of the invention moves with the associated tooth as it erupts from the gum. That is, as the tooth is pulled down (or up) by the force applied by the wire, the position of the wire receiving portion relative to the adjacent brackets will change. The offset of the first wire receiving portion relative to the adjacent brackets thus decreases, and the force applied by the wire on the orthodontic device and associated tooth may decrease. Moving the wire to a second wire receiving portion can be used to re-establish a more optimal force to continue to encourage eruption of the tooth in a shorter timeframe.

Whilst the offset of the second wire receiving portion relative to the adjacent brackets may have been too great initially, as the tooth erupts it approaches an offset corresponding to the initial offset of the first wire receiving portion (i.e. the offset when the brace was first fitted). The position of the second wire receiving portion may then be considered to be in an appropriate position for the brace wire to be moved to.

By adjusting the orthodontic device in this manner, an orthodontist can easily tailor the amount of force that may be applied to the tooth throughout the eruption process. The orthodontist may tailor the amount of force applied by the orthodontic device without necessarily removing the brace wire or the orthodontic device itself.

The second wire receiving portion may be positioned further from the body than the first wire receiving portion. The second wire receiving portion may have a greater offset from the centre of the body than the offset of the first wire receiving portion from the centre of the body.

According to a sixth example which does not form part of the claimed invention, there is provided a method of removing an orthodontic device from a tooth, comprising the step of detaching or de-bonding an orthodontic device of the invention from a tooth (preferably a fully-erupted tooth).

According to a further example which does not form part of the claimed invention, there is provided an orthodontic device for use in a dental brace for advancing eruption of a tooth, the device comprising:
a body including a base for bonding to the tooth;
an arm extending away from the body; and
a wire receiving portion disposed on the arm in a position offset from the body, the wire receiving portion being arranged for receiving part of a brace wire along an axis which in use extends substantially across the tooth.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a front perspective view of a first embodiment of an orthodontic device not covered by the claimed invention;
Figure 2 shows a front perspective view of the orthodontic device of Figure 1, where the arm is in a bent or curved state;
Figure 3 shows the orthodontic device of Figure 1 as part of a dental brace on a set of teeth;
Figure 4 shows a second embodiment of an orthodontic device according to the present invention;
Figure 5 shows a third embodiment of an orthodontic device not covered by the claimed invention;
Figure 6 shows a fourth embodiment of an orthodontic device not covered by the claimed invention;
Figure 7a shows a side view of a fifth embodiment of an orthodontic device not covered by the claimed invention;
Figure 7b shows a front view of the orthodontic device of Figure 7a;
Figure 8a shows a side view of a sixth embodiment of an orthodontic device according to the present invention; and
Figure 8b shows a front view of the orthodontic device of Figure 8a.

### DESCRIPTION OF PREFERRED EMBODIMENTS

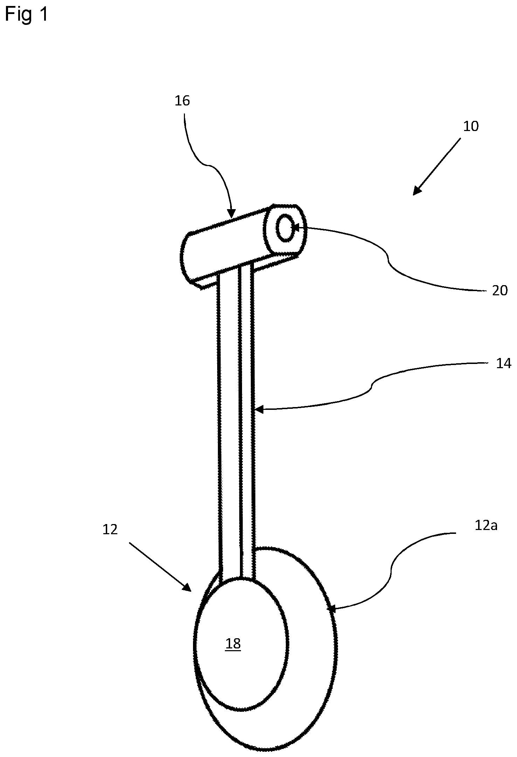

Referring firstly to Figure 1, an orthodontic device is indicated generally at 10. The device 10 is shown from the front side, which is the side visible when a person smiles if the device 10 is fitted to a front or visible side of a tooth. The device 10 is suitable for bonding to a tooth in an upper or lower set of teeth. The device 10 may also be referred to as an orthodontic bracket. The device 10 can be made of any suitable material, including but not limited to: metal, alloy, ceramic, plastic or composite material.

The orthodontic device has a body 12. An arm 14 extends outwardly from the body 12. A wire receiving portion 16 is provided on the arm 14, for receiving a brace wire (also referred to as archwire). The body, arm and wire receiving portion are all integrally formed in this embodiment.

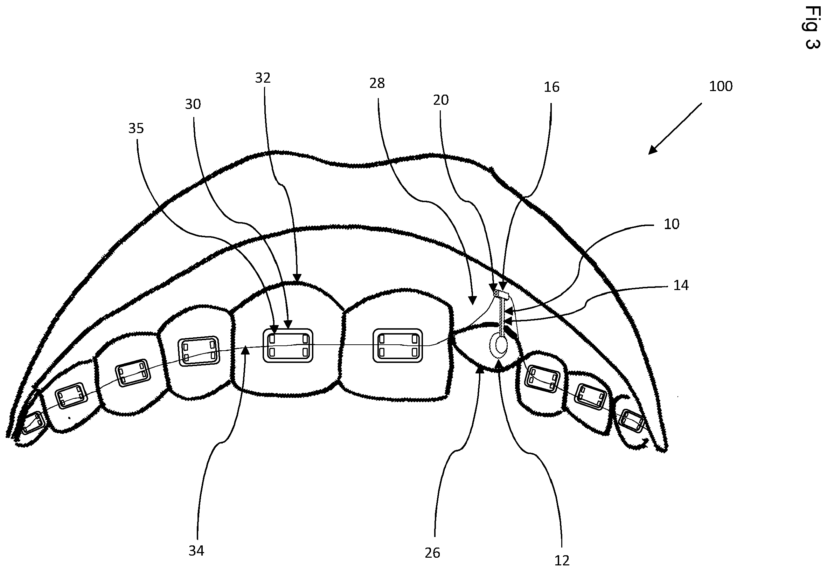

The body 12 includes a base 12a. The base 12a includes a surface suitable for bonding the orthodontic device 10 to an exposed surface of a partially erupted tooth (26, see Figure 3). The body 12 is substantially wider than it is thick, for providing a low profile when bonded to a tooth.

In this embodiment, the body 12 and its base 12a are approximately circular in shape, although square, hexagonal or other shapes (including irregular shapes) are contemplated.

The base 12 in this embodiment has a diameter of about 3mm to 5mm. It will be appreciated that in other embodiments the size of the body 12 and/or the base 12a may vary as long as they are suitable for bonding to the intended tooth without overlapping or interfering with any neighbouring teeth during use.

The base 12a faces towards the tooth when fitted as part of a dental brace. The body 12 has a front face 18. The front face 18 faces away from the tooth during use.

The base 12a in this embodiment can be a mesh base. The mesh base improves bonding between the base body 12 and the surface of the partially erupted tooth.

Any suitable biocompatible or non-toxic adhesive may be used to bond the body 12 to the surface of the partially erupted tooth. Conventional tooth-bonding adhesive may be used.

The arm 14 extends outwards from the side or front face 18 of the body 12 in a direction substantially parallel to a plane at the base (or a plane of the base). In this embodiment, the arm 14 is about 4 mm or 5 mm long. In other embodiments, the length of the arm 14 may be shorter or longer as required to provide the wire receiving portion at a suitable displacement from the base 12a.

In this embodiment, the wire receiving portion 16 is disposed on an end of the arm 14, distal from the body 12. The wire receiving portion 16 is approximately cylindrical. An aperture or bore 20 is provided through the wire receiving portion 16. The aperture 20 is sized and shaped to receive a brace wire during use. The aperture 20 has a substantially circular cross section for receiving a wire, which may also have a substantially circular cross section. The aperture 20 is sized to have a diameter greater than that of typical brace wire, although in some embodiments the aperture size may substantially correspond to the wire diameter.

In other embodiments, the brace wire may be received by a slot in the wire receiving portion 16 extending through an edge of the cylindrical wire receiving portion 16. The slot may be disposed through an edge or side of the wire receiving portion 16.

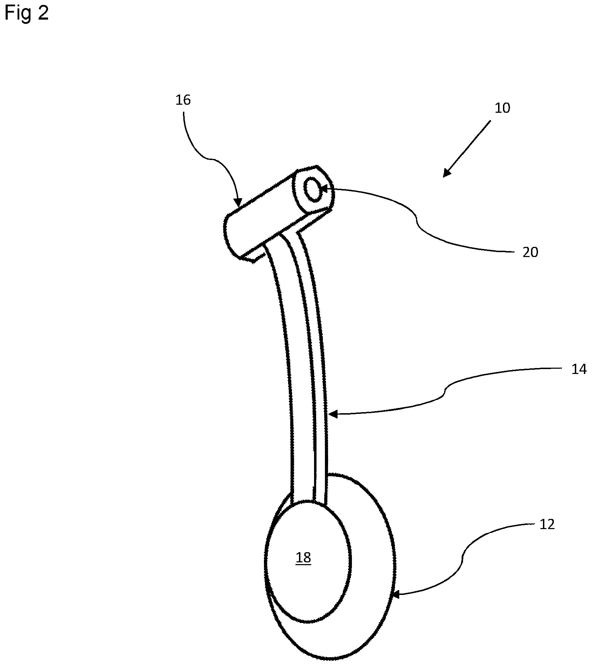

Referring now to Figure 2, the arm 14 is shown in a bent or curved state. This can achieved by bending the arm 14 of Figure 1 into that shape, when the arm is made of a malleable material. Alternatively, another embodiment of the device 10 may be formed with the arm in a curved state *ab initio.*

The arm 14 being bendable, or otherwise adjustable, allows the wire receiving portion 16 to be repositioned. Bending the arm 14 around the gum, for example, may be beneficial to avoid it catching the inside of a person's mouth when fitted to a tooth. Providing a malleable arm 14 allows the orthodontist to tailor the shape of the orthodontic tool 10 to the individual's mouth. In Figure 2, the arm 14 is shown bent in a direction away from the mesh base.

It will be appreciated that the arm may be provided with any suitable curvature or shape, whether that is imparted by bending the arm or as a pre-formed shape.

Referring now to Figure 3, a dental brace is generally indicated at 100, and is shown fitted to a set of a person's teeth. The dental brace 100 includes the orthodontic device 10 bonded to a partially erupted tooth 26. The partially erupted tooth 26 is partially erupted from a gum 28. The orthodontic device 10 is fitted in place of a conventional bracket, as part of an otherwise conventional dental brace system.

The dental brace 100 has a plurality of metal brackets, one of which is indicated at 30. The metal brackets 30 are bonded to a plurality of teeth 32. In this embodiment, the dental brace 100 is bonded to a plurality of teeth 32 in an upper jaw. It will be appreciated that the dental brace 100 could bonded to a plurality of teeth 32 in a lower jaw. In further embodiments, dental braces 100 could be bonded respectively to a plurality of teeth 32 in both the upper and lower jaw, and may each include one or more orthodontic devices.

A length of brace wire 34 is secured to each of the brackets 30 along an axis which passes over centres of exposed portions of each fully erupted tooth. The brace wire 34 is also disposed through the aperture 20 in the orthodontic device 10. The brace wire 34 is bent, curved or otherwise deviates up towards the position of the wire receiving portion, and then back down to the neighbouring bracket 30. That part of the brace wire therefore overlies gum over the unerupted portion of the partially-erupted tooth, and does not pass directly over the body 12 or base 12a.

Ligatures 35 or other securing means can be provided on each bracket 30 for securing the brace wire 34 to the bracket 30. In this embodiment, the ligatures 35 are elastic ligatures.

A ligature 35 is not required on the body 12 of the orthodontic device 10 because the brace wire 34 is not secured to the body 12. The wire can be held securely by passing through the bore 20. In other embodiments, a ligature 35 or securing means may be provided on the wire receiving means 16, e.g. if there is a possibility for the wire to become detached from the wire receiving portion 16.

During use, when the brace has been fitted, the brace wire 34 applies a force on the orthodontic device 10 in a direction extending away from the root of the partially erupted tooth 26. In other words, the brace wire 34 provides a force in a direction away from the gum 28 for bringing the tooth into vertical alignment with the adjacent teeth 32.

In the case where a gap is too small for a partially erupted tooth to erupt into, a conventional dental brace may first be used to laterally move the erupted teeth to provide a suitably-sized gap. Once that gap is available, the orthodontic device 10 may be fitted to the partially erupted tooth and joined to the rest of dental brace via the brace wire.

Where conventional braces are already fitted to a set of teeth, the orthodontic device 10 can be fitted to the partially erupted tooth 26 to cosmetically align the tooth with the rest of the teeth by: applying a suitable tooth adhesive or cement to the mesh base of the orthodontic device 10; and bonding the orthodontic device 10 to the erupted portion of the partially erupted tooth 26.

The position of wire receiving portion 16 can be adjusted by bending or otherwise shaping the arm 14 to introduce a suitable curvature around the gum.

The dental brace 100 can be used to cosmetically align the partially erupted tooth 26 with the other neighbouring teeth, assuming a suitable gap is already present. Fitting the dental brace 100 to teeth may be done by first individually bonding each bracket 30 to the various teeth 32, and bonding the orthodontic device 10 to the erupted portion of the partially erupted tooth 26. Then, the brace wire 34 can be fitted (usually sequentially) to each bracket 30 and at a suitable point passed through the aperture 20 in the orthodontic device 10, and secured to the brackets 30 using the ligatures 35.

After the partially erupted tooth has been vertically aligned with the rest of the teeth, i.e. fully erupted, the orthodontic device 10 can be removed from the tooth. A conventional bracket may be attached in its place if the dental brace is to be used for further cosmetic alignment of the teeth.

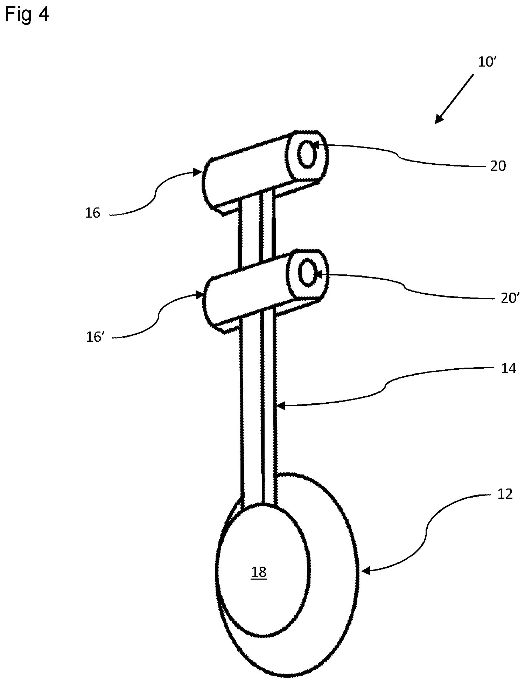

Referring now to Figure 4, a second embodiment of the orthodontic device is generally indicated at 10'. Where the features of the orthodontic device 10' are not described, they may be considered identical or substantially similar to those of the first embodiment above. Like reference numerals are used for like features.

In this embodiment, a second wire receiving portion 16' is provided. The second wire receiving portion 16' is substantially identical to the first wire receiving portion 16, except for its position on the arm 14. The second wire receiving portion 16' is disposed on the arm 14. The second wire receiving portion 16' is disposed between the body 12 and the first wire receiving portion 16.

The second wire receiving portion 16' has a smaller lateral offset from the body 12 than the first wire receiving portion 16. The second wire receiving portion 16' has an aperture 20' like that of the first wire receiving portion 16. The aperture 20' may pass through the arm 14 or to a side of the arm 14. The second receiving portion 16' allows the brace wire (34, see Figure 3) to be repositioned from the first portion to provide an appropriate force on the tooth 26 throughout the eruption process.

With the device 10' fitted as part of a dental brace, the brace wire (34, Figure 3) may be repositioned by removing the brace wire (34, Figure 3) from one of the wire receiving portions and re-fitting the brace wire (34, Figure 3), or replacement brace wire, to the other of the wire receiving portions. Here, wire would be removed from the second portion 16' and wire would then be secured to the first portion 16.

It will be appreciated that in other embodiments, additional wire receiving portions 16 may be provided to provide additional options for wire positioning.

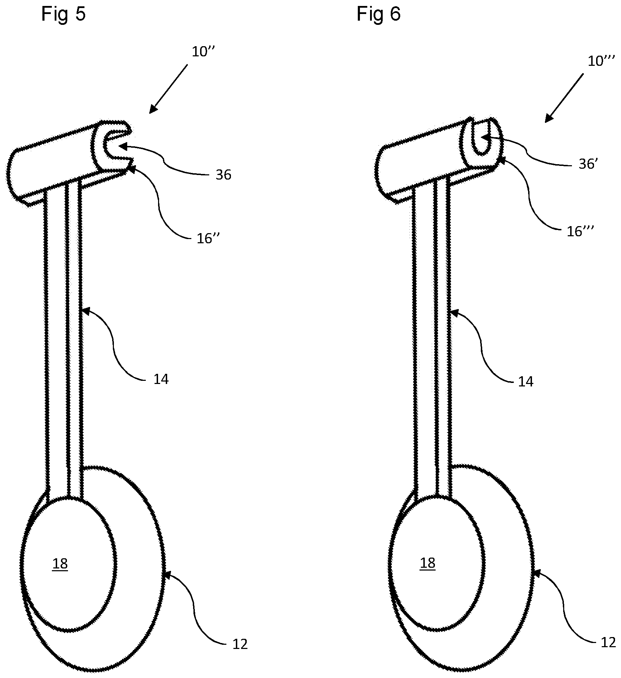

Referring now to Figures 5 and 6, third and fourth embodiments of the orthodontic device are shown generally at 10" and 10‴. Where the features of the orthodontic devices 10", 10‴ are not described, they can be considered identical or similar to those of the first embodiment. Like reference numerals are used for like features.

In these embodiments, the wire receiving portions 16", 16‴ each include open-ended slots 36, 36', respectively. Similar to the through apertures 20, 20' of the first and second embodiments, the open-ended slots 36, 36' are arranged to receive the brace wire (34, Figure 3) during use. It will be appreciated that the slot could instead be provided in the front side of the wire receiving portion in some embodiments. Referring to Figure 5, the third embodiment of the orthodontic device 10" is shown. In this embodiment, the slot 36 through the wire receiving portion 16" has a depth that extends in a direction from the base towards the front face 18 of the body 12. In other words, the slot 36 has a depth that extends in a direction perpendicular to the plane of the base.

Referring to Figure 6, the fourth embodiment of the orthodontic device 10‴ is shown. In this embodiment, the slot 36' through the wire receiving portion 16‴ has a depth that extends in a direction from an end of the wire receiving portion 16‴ distal from the body 12 in a direction towards the body 12. In other words, the slot 36' has a depth that extends in a direction substantially along the arm. The devices of the third and/or fourth embodiments may have any feature or combination of features of the first and second embodiments, e.g. additional wire receiving portions with a slot or bore.

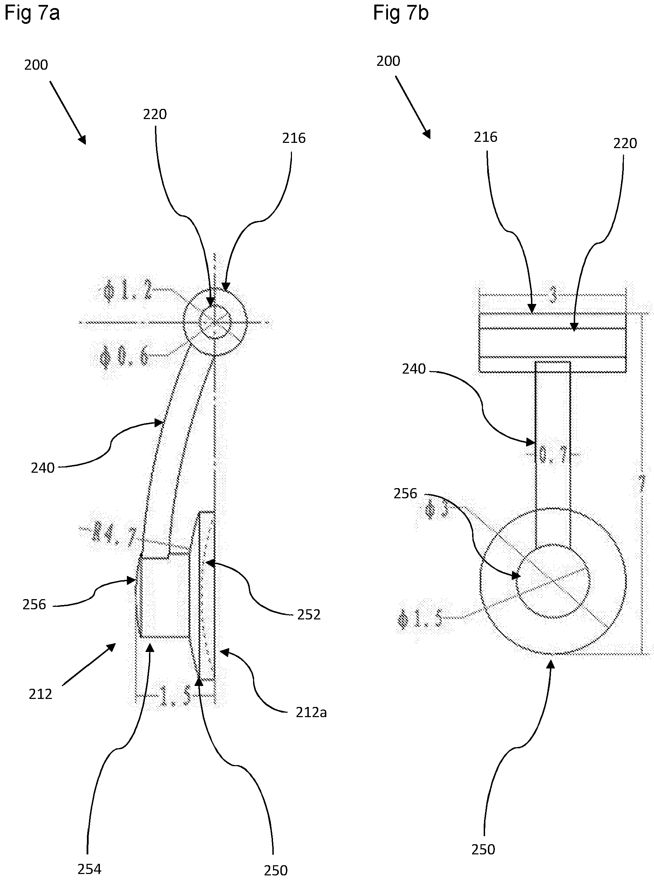

Referring now to Figures 7a and 7b, a fifth embodiment of the orthodontic device is indicated generally at 200. The orthodontic device 200 of the fifth embodiment is generally similar to the orthodontic device 10 of the first embodiment, but differences between the orthodontic devices 10, 200 of the first and fifth embodiments are described below.

In this embodiment, the arm 240 is pre-formed into a curved shape. The curved shape curves towards a plane disposed at the base of the device. Similarly to described above, a wire receiving portion 216 is provided at an end of the arm 240. The wire receiving portion 216 includes a bore or through aperture 220 with an axis for receiving the brace wire.

In this embodiment, the bore 220 for receiving the brace wire is substantially disposed in a plane of the base 212a. The curvature of the arm 240 is designed to achieve this whilst taking into account the length of the arm.

In this embodiment, the body 212 includes a disc-shaped element with a substantially conical portion 250. The base 212a includes an indent 252 in the portion 250. The indent 252 provides a space to receive adhesive.

The body 212 includes an arm support portion or hub 254. The arm support portion 254 protrudes from a front face of the base portion 250, the front face facing away from the tooth during use.

The arm support portion 254 is substantially cylindrical. The arm support portion 254 is disposed substantially central to the base portion. A front face of the arm support portion 254 includes a domed top 256 adjacent to the cylindrical wall. The domed top 256 may be considered to improve the mouthfeel of the device for the user when the orthodontic device 200 is fitted to a person's tooth.

The arm 240 is attached directly to the body 212 at the arm support portion 254. The arm 240 is attached to a sidewall of the arm support portion 254.

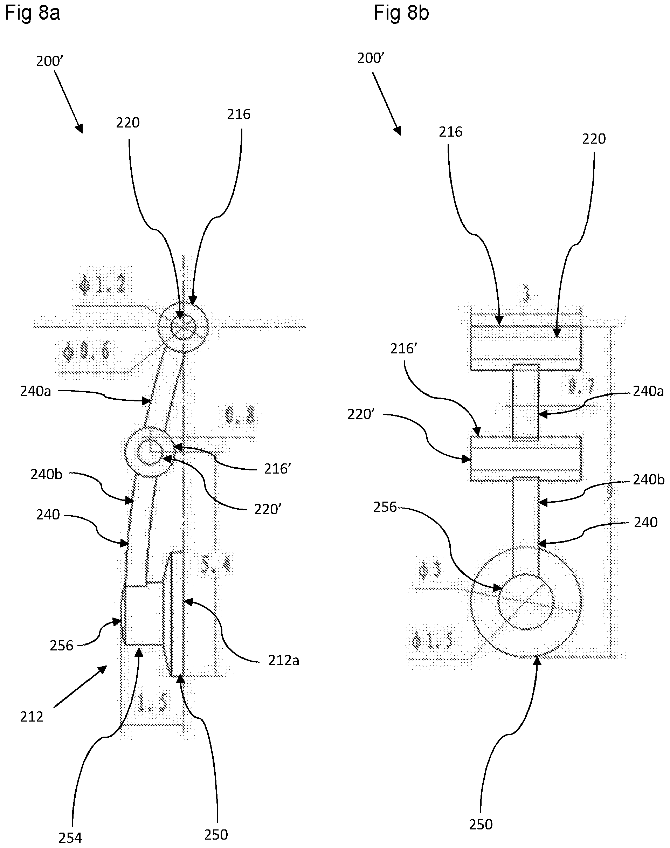

Referring now to Figures 8a and 8b, a sixth embodiment of the orthodontic device is indicated generally at 200'. The orthodontic device 200' of the sixth embodiment is substantially similar to the orthodontic device 200 of the fifth embodiment and includes the features of that embodiment, plus the following features described below.

The orthodontic device 200' includes a second wire receiving portion, 216'. The second wire receiving portion 216' is disposed on the arm 240. The second wire receiving portion 216' may be considered to divide the arm 240 into a first arm portion 240a and a second arm portion 240b.

The first arm portion 240a extends from the first wire receiving portion 216 towards the second wire receiving portion 216', The second arm portion 240b extends from the second wire receiving portion 216' to the body 212.

The pre-formed curvatures of the first and second arm portions 240a, 240b share a common arc.

Exemplary relative dimensions, which may be in millimetres, are indicated in Figures 7a and 7b, and in Figures 8a and 8b, but it will be appreciated that minor variations in dimensions may be employed within the scope of the present invention for the various embodiments. In some embodiments the measurements can be used as examples of relative scale.

Variations of the devices of the fifth and/or sixth embodiments may have any feature or combination of features of the previous embodiments, e.g. straight arm portions and/or wire receiving portions with a slot or bore.

The embodiments described above are provided by way of example only, and various changes and modifications will be apparent to persons skilled in the art without departing from the scope of the present invention as defined by the appended claims.

## Claims

1. An orthodontic device for use in a dental brace for advancing eruption of a tooth, the device comprising:
a body including a base for bonding to the tooth, a top face opposite the base, and a sidewall between the base and the top face, the body having a central longitudinal axis which passes through the base and the top face;
an arm extending out of the sidewall between the base and top face, the arm following a longitudinal axis disposed in a plane parallel to the central longitudinal axis of the body, the arm being spaced from the base and adjacent to the top face; and at least first and second wire receiving portions disposed on the arm,
the first wire receiving portion fixed on the arm in a position offset from the body, the second wire receiving portion being fixed in a second different position offset from the body along the arm, each of the first and second wire receiving portions including a bore or through aperture for one of the first and second wire receiving portions to receive part of a brace wire along an axis which in use extends substantially across the tooth, in which the second wire receiving portion is fixed midway along the arm, between the body and the first wire receiving portion.

2. An orthodontic device as claimed in claim 1, in which the base of the body and a central region or axis of the bore or through aperture of the first wire receiving portion are disposed on a common lateral plane.

3. An orthodontic device as claimed in any preceding claim, in which the body includes a hub atop the base, and the arm extends radially out of the hub when viewed from the central longitudinal axis of the body.

4. An orthodontic device as claimed in any preceding claim, in which the longitudinal axis followed by the arm intersects the bore or through aperture of the first wire receiving portion.

5. An orthodontic device as in any preceding claim, in which the arm includes a first arm portion connected between the first wire receiving portion and the second wire receiving portion, and a second arm portion connected between the second wire receiving portion and the body.

6. An orthodontic device as claimed in any preceding claim, in which the first wire receiving portion or the second wire receiving portion is substantially as wide as the base.

7. An orthodontic device as claimed in any preceding claim, in which a diameter of the bore or through aperture is substantially half of a diameter of the wire receiving portion.

8. An orthodontic device as claimed in any preceding claim, in which a length to width ratio of the device is substantially between 2:1 and 3:1.

9. An orthodontic device as claimed in any preceding claim, in which the arm has left and right sides for facing towards left and right sides of the tooth, and the first wire receiving portion is arranged on the arm for receiving the wire in a direction from the left side to the right side of the arm, during use.

10. An orthodontic device as claimed in any preceding claim, in which the first wire receiving portion is disposed at or towards a distal end of the arm.

11. An orthodontic device as claimed in any preceding claim, in which the first wire receiving portion is offset from a centre of the body in a direction along the arm by one of: at least 2mm; at least 3mm; at least 5mm.

12. An orthodontic device as claimed in any preceding claim, in which the base comprises a mesh base or mesh pad.

13. An orthodontic device as in any preceding claim, in which the first and second wire receiving portions are identical except for their positions along the arm.

14. An orthodontic device as claimed in any preceding claim, in which the arm is pre-formed in a curved shape which curves towards a plane disposed at the base of the device.

15. An orthodontic device as claimed in any preceding claim, in which the arm is integrally formed with the body and/or the first wire receiving portion is integrally formed with the arm or the second wire and or /the second wire receiving portion is integrally formed with the arm.

## Patentansprüche

1. Orthodontische Vorrichtung zur Verwendung in einer Zahnspange, um das Durchbrechen eines Zahns voranzutreiben, wobei die Vorrichtung Folgendes umfasst:
einen Körper einschließlich einer Basis zur Befestigung am Zahn, einer der Basis gegenüberliegenden Oberseite und einer Seitenwand zwischen der Basis und der Oberseite, wobei der Körper eine zentrale Längsachse aufweist, die durch die Basis und die Oberseite verläuft;
einen Arm, der sich aus der Seitenwand zwischen der Basis und der Oberseite erstreckt, wobei der Arm einer Längsachse folgt, die in einer Ebene parallel zur zentralen Längsachse des Körpers verläuft, wobei der Arm von der Basis beabstandet ist und an die Oberseite angrenzt; und mindestens einen ersten und einen zweiten Drahtaufnahmeabschnitt, die an dem Arm angeordnet sind,
wobei der erste Drahtaufnahmeabschnitt an dem Arm in einer vom Körper versetzten Position fixiert ist, wobei der zweite Drahtaufnahmeabschnitt an einer zweiten, vom Körper versetzten Position entlang des Arms fixiert ist, wobei sowohl der erste als auch der zweite Drahtaufnahmeabschnitt eine Bohrung oder Durchgangsöffnung aufweisen, damit einer von dem ersten und dem zweiten Drahtaufnahmeabschnitt einen Teil eines Spangendrahts entlang einer Achse aufnehmen kann, die sich bei Verwendung im Wesentlichen über den Zahn erstreckt, wobei der zweite Drahtaufnahmeabschnitt mittig entlang des Arms zwischen dem Körper und dem ersten Drahtaufnahmeabschnitt fixiert ist.

2. Orthodontische Vorrichtung nach Anspruch 1, wobei die Basis des Körpers und ein zentraler Bereich oder eine zentrale Achse der Bohrung oder Durchgangsöffnung des ersten Drahtaufnahmeabschnitts in einer gemeinsamen seitlichen Ebene angeordnet sind.

3. Orthodontische Vorrichtung nach einem der vorhergehenden Ansprüche, wobei der Körper eine Nabe auf der Basis einschließt und sich der Arm radial aus der Nabe heraus erstreckt, gesehen von der zentralen Längsachse des Körpers.

4. Orthodontische Vorrichtung nach einem der vorhergehenden Ansprüche, bei der die vom Arm verfolgte Längsachse die Bohrung oder Durchgangsöffnung des ersten Drahtaufnahmeabschnitts schneidet.

5. Orthodontische Vorrichtung nach einem der vorhergehenden Ansprüche, bei der der Arm einen ersten Armabschnitt, der zwischen dem ersten Drahtaufnahmeabschnitt und dem zweiten Drahtaufnahmeabschnitt verbunden ist, und einen zweiten Armabschnitt einschließt, der zwischen dem zweiten Drahtaufnahmeabschnitt und dem Körper verbunden ist.

6. Orthodontische Vorrichtung nach einem der vorhergehenden Ansprüche, wobei der erste Drahtaufnahmeabschnitt oder der zweite Drahtaufnahmeabschnitt im Wesentlichen so breit ist wie die Basis.

7. Orthodontische Vorrichtung nach einem der vorhergehenden Ansprüche, wobei der Durchmesser der Bohrung oder Durchgangsöffnung im Wesentlichen die Hälfte des Durchmessers des Drahtaufnahmeabschnitts beträgt.

8. Orthodontische Vorrichtung nach einem der vorhergehenden Ansprüche, wobei das Verhältnis von Länge zu Breite der Vorrichtung im Wesentlichen zwischen 2:1 und 3:1 liegt.

9. Orthodontische Vorrichtung nach einem der vorhergehenden Ansprüche, wobei der Arm eine linke und eine rechte Seite aufweist, die zur linken und rechten Seite des Zahns hin zeigen, und der erste Drahtaufnahmeabschnitt am Arm so angeordnet ist, dass er den Draht bei Verwendung in einer Richtung von der linken Seite zur rechten Seite des Arms aufnimmt.

10. Orthodontische Vorrichtung nach einem der vorhergehenden Ansprüche, wobei der erste Drahtaufnahmeabschnitt an oder in Richtung eines distalen Endes des Arms angeordnet ist.

11. Orthodontische Vorrichtung nach einem der vorhergehenden Ansprüche, wobei der erste Drahtaufnahmeabschnitt von einer Mitte des Körpers in einer Richtung entlang des Arms um eines der folgenden versetzt ist: mindestens 2 mm; mindestens 3 mm; mindestens 5 mm.

12. Orthodontische Vorrichtung nach einem der vorhergehenden Ansprüche, wobei die Basis eine Netzbasis oder ein Netzpolster umfasst.

13. Orthodontische Vorrichtung nach einem der vorhergehenden Ansprüche, wobei der erste und der zweite Drahtaufnahmeabschnitt bis auf ihre Positionen entlang des Arms identisch sind.

14. Orthodontische Vorrichtung nach einem der vorhergehenden Ansprüche, wobei der Arm in einer gekrümmten Form vorgeformt ist, die sich zu einer an der Basis der Vorrichtung angeordneten Ebene hin krümmt.

15. Orthodontische Vorrichtung nach einem der vorhergehenden Ansprüche, wobei der Arm einstückig mit dem Körper geformt ist und/oder der erste Drahtaufnahmeabschnitt einstückig mit dem Arm geformt ist oder der zweite Draht und oder /der zweite Drahtaufnahmeabschnitt einstückig mit dem Arm geformt ist.

## Revendications

1. Dispositif orthodontique pour son utilisation dans une attelle dentaire destinée à avancer l'éruption d'une dent, le dispositif comprenant :
un corps comportant une base destinée à être collée à la dent, une face supérieure opposée à la base, et une paroi latérale entre la base et la face supérieure, le corps ayant un axe longitudinal central qui passe par la base et la face supérieure ;
un bras s'étendant hors de la paroi latérale entre la base et la face supérieure, le bras suivant un axe longitudinal disposé dans un plan parallèle à l'axe longitudinal central du corps, le bras étant espacé de la base et adjacent à la face supérieure ; et au moins des première et seconde portions de réception de fil disposées sur le bras,
la première portion de réception de fil fixée sur le bras dans une position décalée par rapport au corps, la seconde portion de réception de fil étant fixée dans une seconde position différente décalée par rapport au corps le long du bras, chacune des premières et secondes portions de réception de fil comportant un alésage ou une ouverture traversante pour l'une des première et seconde portions de réception de fil pour recevoir une partie d'un fil d'attelle le long d'un axe qui, lors de l'utilisation, s'étend sensiblement en travers de la dent, dans lequel la seconde portion de réception de fil est fixée à mi-chemin le long du bras, entre le corps et la première portion de réception de fil.

2. Dispositif orthodontique selon la revendication 1, dans lequel la base du corps et une région centrale ou un axe de l'alésage ou de l'ouverture traversante de la première portion de réception de fil sont disposés sur un plan latéral commun.

3. Dispositif orthodontique selon l'une quelconque revendication précédente, dans lequel le corps comporte un moyeu au sommet de la base, et le bras s'étend radialement hors du moyeu lorsqu'on le regarde depuis l'axe longitudinal central du corps.

4. Dispositif orthodontique selon l'une quelconque revendication précédente, dans lequel l'axe longitudinal suivi par le bras croise l'alésage ou l'ouverture traversante de la première portion de réception de fil.

5. Dispositif orthodontique selon l'une quelconque revendication précédente, dans lequel le bras comporte une première portion de bras reliée entre la première portion de réception de fil et la seconde portion de réception de fil, et une seconde portion de bras reliée entre la seconde portion de réception de fil et le corps.

6. Dispositif orthodontique selon l'une quelconque revendication précédente, dans lequel la première portion de réception de fil ou la seconde portion de réception de fil est sensiblement aussi large que la base.

7. Dispositif orthodontique selon l'une quelconque revendication précédente, dans lequel un diamètre de l'alésage ou de l'ouverture traversante est sensiblement égal à la moitié d'un diamètre de la portion de réception de fil.

8. Dispositif orthodontique selon l'une quelconque revendication précédente, dans lequel un rapport longueur/largeur du dispositif est sensiblement entre 2:1 et 3:1.

9. Dispositif orthodontique selon l'une quelconque revendication précédente, dans lequel le bras a des côtés gauche et droit destinés à faire face aux côtés gauche et droit de la dent, et la première portion de réception de fil est agencée sur le bras pour la réception du fil dans une direction allant du côté gauche au côté droit du bras, pendant l'utilisation.

10. Dispositif orthodontique selon l'une quelconque revendication précédente, dans lequel la première portion de réception de fil est disposée au niveau de ou vers une extrémité distale du bras.

11. Dispositif orthodontique selon l'une quelconque revendication précédente, dans lequel la première portion de réception de fil est décalée par rapport à un centre du corps dans une direction le long du bras par l'un de : au moins 2 mm ; au moins 3 mm ; au moins 5 mm.

12. Dispositif orthodontique selon l'une quelconque revendication précédente, dans lequel la base comprend une base en maille ou un tampon en maille.

13. Dispositif orthodontique selon l'une quelconque revendication précédente, dans lequel les première et seconde portions de réception de fil sont identiques à l'exception de leur position le long du bras.

14. Dispositif orthodontique selon l'une quelconque revendication précédente, dans lequel le bras est préformé en un profilé courbe qui s'incurve vers un plan disposé au niveau de la base du dispositif.

15. Dispositif orthodontique selon l'une quelconque revendication précédente, dans lequel le bras est intégralement formé avec le corps et/ou la première portion de réception de fil est intégralement formée avec le bras ou le second fil et ou/ la seconde portion de réception de fil est intégralement formée avec le bras.
